# FASCICULE DE BREVET EUROPEEN

(11) **EP 3 530 571 B1**
(45) Date de publication et mention de la délivrance du brevet: **09.09.2020**
(21) Numéro de dépôt: 19159025.6
(22) Date de dépôt: 25.02.2019
(51) Int. Cl.: B64D 29/06, F02K 1/72

(54) **NACELLE EQUIPEE D'UN SYSTEME INVERSEUR COMPORTANT DES PORTES ET DES SYSTEMES ANTI-VIBRATION DES PORTES EN POSITION STOCKEE**
GONDEL MIT UMKEHRSYSTEM, DER KLAPPEN UND ANTI-VIBRATIONSSYSTEME FÜR DIE KLAPPEN IN EINGEFAHRENER STELLUNG AUFWEIST
NACELLE WITH REVERSER SYSTEM COMPRISING DOORS AND ANTI-VIBRATION SYSTEMS FOR THE DOORS IN STOWED POSITION

(30) Priorité: 23.03.2018 FR 1852541
(43) Date de publication de la demande: 28.08.2019
(73) Titulaire: Airbus Operations S.A.S., 31060 Toulouse (FR)
(72) Inventeur: Ridray, Frédéric, 32600 L'Isle Jourdain (FR); Piard, Frédéric, 31170 Tournefeuille (FR)
(74) Mandataire: Gicquel, Olivier Yves Gérard

(56) Documents cités:
- EP-A2- 2 409 921
- EP-A2- 2 447 159
- US-A1- 2016 341 149
- US-A1- 2017 167 439

## Description

La présente invention concerne une nacelle d'un turboréacteur double flux qui est équipée d'un système inverseur comportant un ensemble mobile en translation sur lequel sont articulées des portes extérieures mobiles entre une position stockée et une position déployée et un système anti-vibration qui bloque les portes lorsqu'elles sont en position stockée, un turboréacteur double flux comportant une telle nacelle, ainsi qu'un aéronef comportant au moins un tel turboréacteur double flux.

Un turboréacteur double flux de l'état de la technique présente un moteur sous forme d'un noyau et une nacelle entourant le moteur. Un tel turboréacteur double flux équipe un aéronef qui présente sous chaque aile un mât fixé sous l'aile et portant le turboréacteur double flux. Le turboréacteur double flux comporte entre la nacelle et le moteur, une veine secondaire dans laquelle s'écoule un flux secondaire.

Afin d'assurer une inversion de poussée du turboréacteur double flux, la nacelle est équipée d'un système inverseur qui comporte un ensemble mobile qui est mobile en translation parallèlement à l'axe du turboréacteur double flux entre une position avancée et une position reculée. En position reculée, le turboréacteur double flux présente une fenêtre ouverte entre la veine secondaire et l'extérieur de la nacelle.

Afin d'assurer une inversion de la poussée, le système inverseur comporte également des portes articulées sur l'ensemble mobile et qui sont mobiles entre une position stockée et une position déployée lorsque l'ensemble mobile est en position reculée. Le système inverseur comporte en particulier, des portes intérieures qui, en position déployée, se positionnent en travers de la veine secondaire afin de dévier le flux secondaire vers l'extérieur, et des portes extérieures qui, en position déployée, se positionnent en continuité des portes intérieures et vers l'avant afin de dévier le flux secondaire vers l'avant de la nacelle.

En position avancée de l'ensemble mobile et en position stockée des portes, ces dernières sont soumises à de fortes pressions, et il peut arriver qu'elles se mettent à vibrer ce qui peut générer des bruits désagréables, et il est donc nécessaire de trouver un système qui empêche de telles vibrations.

On connaît par les document FR2712635 et EP2447159 des systèmes anti-vibrations de portes extérieures arrangés entre une structure fixe de la nacelle et les portes extérieures.

Un objet de la présente invention est de proposer une nacelle pour un turboréacteur double flux qui est équipée d'un système inverseur avec des portes extérieures mobiles entre une position stockée et une position déployée et pour chaque porte extérieure, au moins un système anti-vibration de porte extérieure, alternatif à ceux décrits dans les documents suscités, qui bloque la porte en position stockée afin d'éviter les vibrations.

A cet effet, est proposée une nacelle pour un turboréacteur double flux tel que revendiqué dans la revendication 1.

Une telle nacelle permet de limiter les vibrations des portes extérieures lorsqu'elles sont en position stockée et avant que le cadre mobile commence à se déplacer vers la position reculée.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant un turboréacteur double flux selon l'invention,
la Fig. 2 est une vue en perspective d'un turboréacteur double flux selon l'invention lorsque le système inverseur de poussée n'est pas activé,
la Fig. 3 est une vue en perspective du turboréacteur double flux de la Fig. 2 lorsque le système inverseur de poussée est activé,
la Fig. 4 est une vue en perspective d'un système anti-vibration selon l'invention monté sur une porte extérieure,
la Fig. 5 est une vue en perspective du système anti-vibration selon l'invention, et
la Fig. 6 est une vue en coupe du système anti-vibration selon le plan VI de la Fig. 5.

Dans la description qui suit, les termes relatifs à une position sont pris en référence au sens d'avancement d'un aéronef.

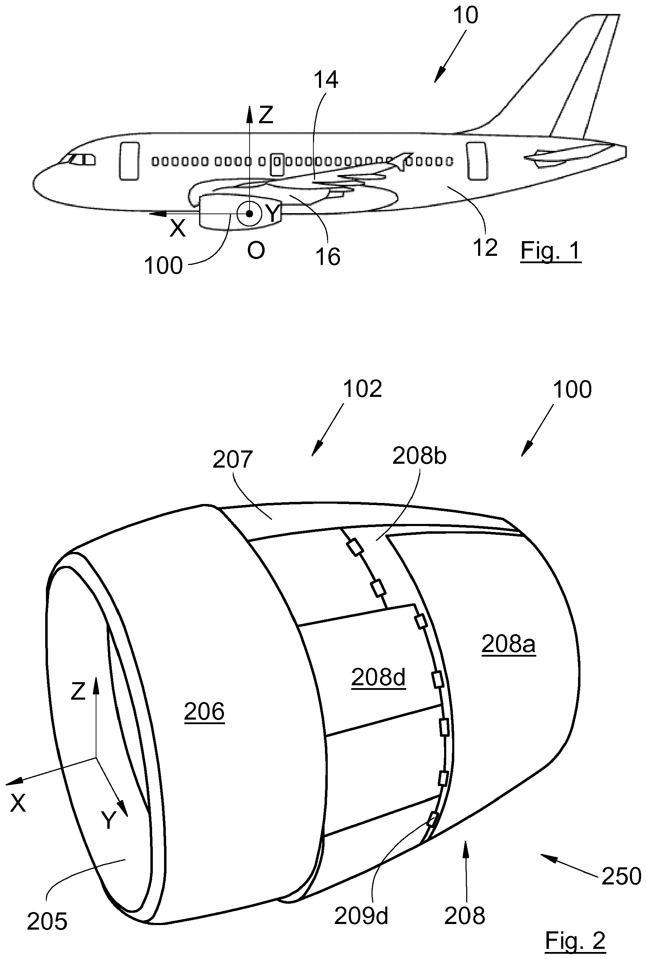

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Dans la description qui suit, et par convention, on appelle X l'axe longitudinal du turboréacteur double flux 100 qui est parallèle à l'axe longitudinal de l'aéronef 10 et orienté positivement vers l'avant de l'aéronef 10, on appelle Y l'axe transversal qui est horizontal lorsque l'aéronef 10 est au sol, et Z l'axe vertical lorsque l'aéronef 10 est au sol, ces trois directions X, Y et Z étant orthogonales entre elles.

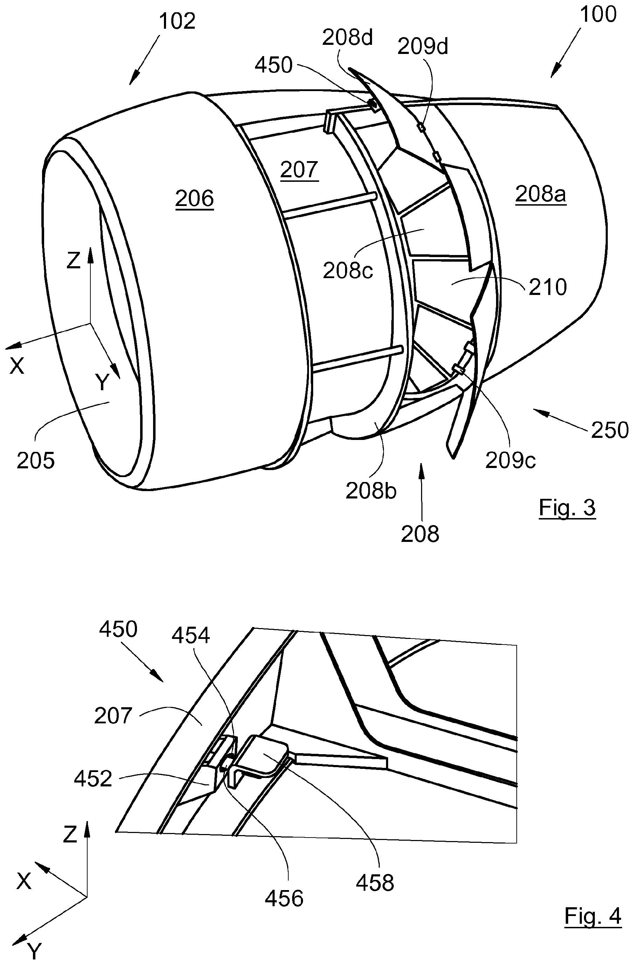

Les Figs. 2 et 3 montrent le turboréacteur double flux 100 selon l'invention.

Le turboréacteur double flux 100 présente une nacelle 102, un moteur qui est logé à l'intérieur de la nacelle 102 sous forme d'un noyau. La nacelle 102 présente un carter de soufflante 206 disposé en avant de la nacelle 102.

La nacelle 102 comporte un système inverseur 250 qui est escamoté sur la Fig. 2 et déployé sur la Fig. 3.

Le turboréacteur double flux 100 présente entre la nacelle 102 et le moteur, une veine secondaire dans laquelle circule un flux secondaire provenant de l'entrée d'air 205 à travers une soufflante et qui s'écoule donc selon un sens d'écoulement qui va de l'avant vers l'arrière de l'aéronef 10.

La nacelle 102 présente une structure fixe 207 qui est montée fixe sur le carter de soufflante 206.

Le système inverseur 250 présente un ensemble mobile 208 qui comprend un capot mobile 208a formant les parois de la tuyère et un cadre 208b. Le cadre 208b prend ici la forme d'un cylindre à parois ajourées. Le capot mobile 208a est fixé au cadre 208b.

Il y a deux capots mobiles 208a disposés de part et d'autre d'un plan médian du turboréacteur double flux 100, chacun constituant un capot extérieur de la nacelle 102 et ils forment globalement un cylindre qui constitue la paroi externe de la veine secondaire.

L'ensemble mobile 208, par l'intermédiaire du cadre 208b, est monté mobile en translation selon une direction de translation globalement parallèle à l'axe longitudinal X sur la structure fixe 207 de la nacelle 102.

La translation du cadre 208b, et donc de l'ensemble mobile 208, est réalisée par tous systèmes de glissières appropriés comme par exemple des glissières entre la structure fixe 207 et le cadre 208b. De la même manière, un premier système de transmission mécanique du système inverseur 250 est fixé à la structure fixe 207 pour déplacer le cadre 208b. Le premier système de transmission mécanique comprend par exemple des actionneurs tels que des vérins, des moteurs, des crémaillères.... Le premier système de transmission mécanique est commandé par une unité de contrôle de l'aéronef 10 et n'est pas décrit plus en détails, car il peut prendre différentes formes à la portée de l'homme du métier.

L'ensemble mobile 208 comporte également des portes d'inversion 208c-d qui sont montées articulées sur le cadre 208b et qui comprennent dans le mode de réalisation de l'invention présenté ici des portes intérieures 208c et des portes extérieures 208d.

Les portes 208c-d sont disposées à l'avant par rapport au capot mobile 208a.

Dans le mode de réalisation de l'invention présenté ici, chaque porte intérieure 208c est montée articulée sur le cadre 208b entre une position stockée et une position déployée (Fig. 3) et inversement. Le passage de la position stockée à la position déployée s'effectue par une rotation de la porte intérieure 208c vers l'intérieur du turboréacteur 100.

Chaque porte intérieure 208c est ici articulée par un bord arrière au cadre 208b par des charnières 209c fixées au cadre 208b tandis que le bord libre opposé se positionne vers l'avant en position stockée et en travers de la veine secondaire et vers le moteur en position déployée.

Les portes extérieures 208d sont disposées à l'extérieur par rapport aux portes intérieures 208c. Chaque porte extérieure 208d est montée en regard d'une porte intérieure 208c et la porte extérieure 208d et la porte intérieure 208c en regard constituent un couple de portes. Le système inverseur 250 comporte ainsi une pluralité de couples de portes 208c-d.

Chaque porte extérieure 208d est montée articulée sur le cadre 208b entre une position stockée (Fig. 2) et une position déployée (Fig. 3) et inversement. Le passage de la position stockée à la position déployée s'effectue par une rotation de la porte extérieure 208d vers l'extérieur du turboréacteur 100. Lorsque les portes intérieures 208c et les portes extérieures 208d sont déployées, elles forment globalement une continuité qui permet de dévier le flux secondaire vers l'extérieur et l'avant de la nacelle 102.

Chaque porte extérieure 208d est articulée par un bord arrière au cadre 208b par des charnières 209d fixées au cadre 208b tandis que le bord libre opposé se positionne vers l'avant en position stockée et vers l'extérieur en position déployée.

En position stockée, les portes extérieures 208d sont disposées entre le capot mobile 208a et le carter de soufflante 206, de manière à constituer une paroi extérieure de la nacelle 102 qui est donc en contact avec le flux d'air qui s'écoule autour de la nacelle 102.

Le passage de chaque porte 208c-d de la position stockée à la position déployée et inversement est assuré par un deuxième système de transmission mécanique du système inverseur 250, comprenant par exemple un moteur, un vérin, un système à crémaillère..... Le deuxième système de transmission mécanique est commandé par une unité de contrôle de l'aéronef 10 et n' est pas décrit plus en détails, car il peut prendre différentes formes à la portée de l'homme du métier.

L'ensemble mobile 208, et donc le cadre 208b, est mobile entre une position avancée (Fig. 2) et une position reculée (Fig. 3) et inversement. En position avancée, l'ensemble mobile 208, et donc le cadre 208b, est positionné le plus en avant possible de manière à ce que les portes extérieures 208d, qui sont en position stockée, soient rapprochées du carter de soufflante 206. En position reculée, l'ensemble mobile 208, et donc le cadre 208b, est positionné le plus en arrière possible de manière à ce que les portes extérieures 208d soient éloignées du carter de soufflante 206.

En position avancée, les portes extérieures 208d prolongent le carter de soufflante 206 vers l'arrière et, de la même manière, le capot mobile 208a prolonge les portes extérieures 208d vers l'arrière.

La position stockée des portes 208c-d peut être adoptée lorsque le cadre 208b est en position avancée ou en position reculée. La position déployée des portes 208c-d ne peut être adoptée que lorsque le cadre 208b est en position reculée.

Le passage de la position avancée du cadre 208b à la position reculée du cadre 208b et déployée des portes 208c-d consiste donc, à partir de la position avancée du cadre 208b et donc des positions stockées des portes 208c-d, à activer le premier système de transmission mécanique pour reculer le cadre 208b par translation par rapport à la structure fixe 207 pour atteindre la position reculée pour le cadre 208b et les positions stockées des portes 208c-d, puis à activer chaque deuxième système de transmission mécanique pour déplacer chaque porte 208c-d de la position stockée à la position déployée.

Le déplacement inverse permet de revenir à la position stockée et avancée.

La nacelle 102 présente une fenêtre 210 ouverte entre la veine secondaire et l'extérieur de la nacelle 102 et qui est délimitée ici à l'avant par la structure fixe 207 et à l'arrière par le capot mobile 208a. En position stockée, les portes 208c-d obturent la fenêtre 210 et en position déployée, les portes 208c-d n'obturent pas la fenêtre 210 et la laissent libre, c'est-à-dire que l'air provenant du flux secondaire traverse la fenêtre 210 pour rejoindre l'extérieur du turboréacteur double flux 100.

Lorsque les portes 208c-d sont en position déployée, le flux secondaire est dévié vers l'extérieur de la nacelle 102 et vers l'avant permettant de produire une contre-poussée.

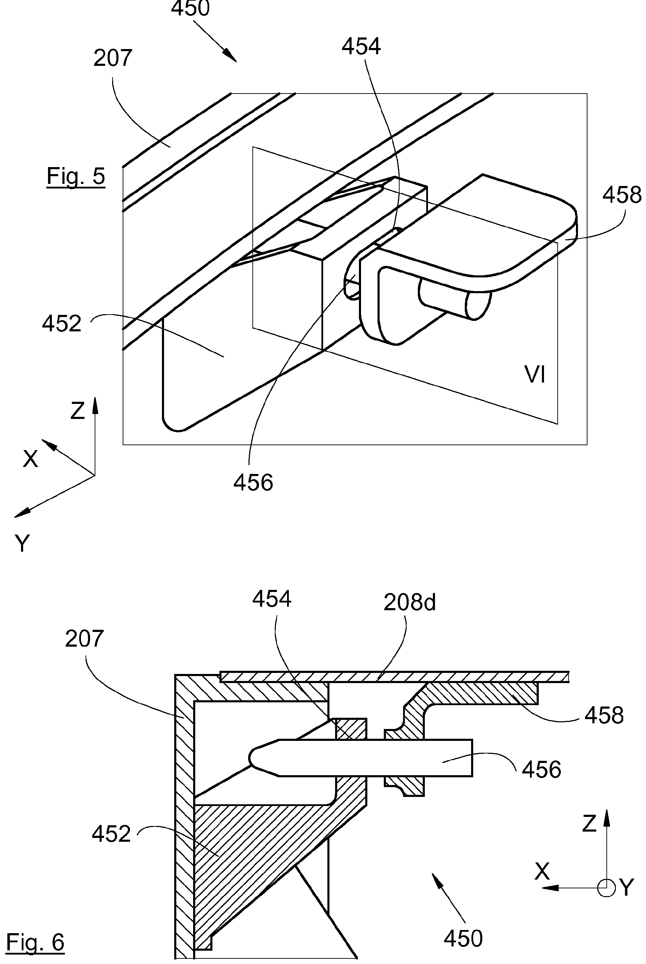

La Fig. 4 montre un détail de la nacelle 102 qui est agrandi en Fig. 5 et vu en coupe en Fig. 6. La Fig. 6 montre une porte extérieure 208d en position stockée et cette porte extérieure 208d n'est pas montrée sur les Figs. 4 et 5 pour permettre de voir le système anti-vibration 450 selon l'invention. Les Figs. 4 à 6 montrent la nacelle 102 en position avancée de l'ensemble mobile 208.

La nacelle 102 présente ici un système anti-vibration 450 de porte extérieure par porte extérieure 208d, mais si les dimensions de la porte extérieure 208d sont trop importantes, il est possible de mettre plusieurs systèmes anti-vibration 450.

Le système anti-vibration 450 de portes extérieure bloque les vibrations de la porte extérieure 208d lorsque l'ensemble mobile 208, et donc le cadre 208b, est en position avancée et que la porte extérieure 208d est en position stockée.

Le système anti-vibration 450 de porte extérieure comporte un sabot 452 fixé à la structure fixe 207 et présente un trou 454 dont l'axe est parallèle à la direction de translation, c'est-à-dire globalement parallèle à l'axe longitudinal X.

Le système anti-vibration 450 comporte également un doigt 456 dont l'axe est également parallèle à la direction de translation et qui est fixé à la porte extérieure 208d, ici par l'intermédiaire d'une équerre 458.

Le doigt 456 et le trou 454 sont configurés de manière à ce que le doigt 456 loge dans le trou 454 lorsque l'ensemble mobile 208, et donc le cadre 208b, est en position avancée, de manière à ce que le doigt 456 sorte du trou 454 lorsque l'ensemble mobile 208, et donc le cadre 208b, quitte la position avancée, et de manière à ce que le doigt 456 pénètre dans le trou 454 lorsque l'ensemble mobile 208, et donc le cadre 208b, rejoint la position avancée depuis la position reculée.

Bien sûr, il est possible de prévoir que le sabot 452 est fixé à la porte extérieure 208d et que le doigt 456 est fixé à la structure fixe 207.

Un tel système anti-vibration 450 de porte extérieure permet en outre de garantir que la porte extérieure 208d reste en position stockée lorsque le cadre 208b est en position avancée, constituant ainsi une sorte de système de verrouillage.

Les dimensions du trou 454 et du doigt 456 selon une direction radiale de la nacelle 102, représentée par exemple par l'axe vertical Z sur la Fig. 6, sont ajustées avec un ajustement du type glissant, de manière à garantir un bon positionnement de la porte extérieure 208d par rapport à la structure fixe 207 en position stockée et avancée et ainsi de garantir les jeux entre ces deux éléments en vol.

L'entrée du doigt 456 dans le trou 454 est facilitée par la forme pointue de l'extrémité du doigt 456 qui entre dans le trou 454.

Pour autoriser un certain débattement angulaire des portes extérieures 208d, lorsque le cadre 208b revient en position avancée, la dimension du trou 454 selon une direction globalement tangentielle par rapport à la nacelle 102, c'est-à-dire perpendiculaire à la direction de translation et à la direction radiale de la nacelle 102, est grande par rapport à la dimension du doigt 456 dans la même direction. Ici, le trou 454 prend la forme d'un trou oblong.

## Revendications

1. Nacelle (102) pour un turboréacteur double flux (100) présentant une veine secondaire, ladite nacelle (102) présentant une fenêtre (210) ouverte entre la veine secondaire et l'extérieur de la nacelle (102) et comportant :
- un carter de soufflante (206),
- une structure fixe (207) fixée au carter de soufflante (206), et
- un système inverseur (250) présentant un cadre (208b) et des portes extérieures (208d) articulées par un bord arrière au cadre (208b),
le cadre (208b) étant mobile en translation sur la structure fixe (207) selon une direction de translation entre une position avancée dans laquelle le cadre (208b) est positionné de manière à ce que les portes extérieures (208d) soient rapprochées du carter de soufflante (206) et une position reculée dans laquelle le cadre (208b) est positionné de manière à ce que les portes extérieures (208d) soient éloignées du carter de soufflante (206),
chaque porte extérieure (208d) étant mobile entre une position stockée dans laquelle elle obture la fenêtre (210) et une position déployée dans laquelle elle n'obture pas la fenêtre (210),
la nacelle (102) étant **caractérisée en ce que**, pour chaque porte extérieure (208d), elle comporte au moins un système anti-vibration (450) des portes extérieures qui comporte :
- un sabot (452) fixé à l'un parmi la structure fixe (207) ou la porte extérieure (208d) et présentant un trou (454) dont l'axe est parallèle à la direction de translation,
- un doigt (456) dont l'axe est parallèle à la direction de translation et qui est fixé à l'autre parmi la porte extérieure (208d) ou la structure fixe (207),
et **en ce que** le doigt (456) et le trou (454) sont configurés de manière à ce que le doigt (456) loge dans le trou (454) lorsque le cadre (208b) est en position avancée, de manière à ce que le doigt (456) sorte du trou (454) lorsque le cadre (208b) quitte la position avancée, et de manière à ce que le doigt (456) pénètre dans le trou (454) lorsque le cadre (208b) rejoint la position avancée depuis la position reculée.

2. Nacelle (102) selon la revendication 1, **caractérisée en ce que** les dimensions du trou (454) et du doigt (456) selon une direction radiale de la nacelle (102) sont ajustées avec un ajustement du type glissant.

3. Nacelle (102) selon l'une des revendications 1 ou 2, **caractérisée en ce que** le trou (454) est oblong selon une direction globalement tangentielle par rapport à la nacelle (102).

4. Turboréacteur double flux (100) comportant un moteur et une nacelle (102) selon l'une des revendications précédentes et qui entoure le moteur et définit avec lui une veine secondaire.

5. Aéronef (10) comportant au moins un turboréacteur double flux (100) selon la revendication précédente.

## Patentansprüche

1. Gondel (102) für ein Zweistrom-Turbostrahltriebwerk (100), das einen Sekundärkanal aufweist, wobei die Gondel (102) ein Fenster (210) aufweist, das zwischen dem Sekundärkanal und der Außenumgebung der Gondel (102) offen ist, und aufweist:
- ein Gebläsegehäuse (206),
- eine am Gebläsegehäuse (206) befestigte ortsfeste Struktur (207), und
- ein Schubumkehrsystem (250), das einen Rahmen (208b) und Außentüren (208d) aufweist, die durch einen hinteren Rand an den Rahmen (208b) angelenkt sind,
wobei der Rahmen (208b) auf der ortsfesten Struktur (207) gemäß einer Translationsrichtung zwischen einer vorgeschobenen Stellung, in der der Rahmen (208b) so positioniert ist, dass die Außentüren (208d) dem Gebläsegehäuse (206) angenähert sind, und einer zurückgeschobenen Stellung translationsbeweglich ist, in der der Rahmen (208b) so positioniert ist, dass die Außentüren (208d) vom Gebläsegehäuse (206) entfernt sind,
wobei jede Außentür (208d) zwischen einer gelagerten Stellung, in der sie das Fenster (210) verdeckt, und einer ausgeklappten Stellung beweglich ist, in der sie das Fenster (210) nicht verdeckt,
wobei die Gondel (102) **dadurch gekennzeichnet ist, dass** sie für jede Außentür (208d) mindestens ein schwingungshemmendes System (450) der Außentüren aufweist, das aufweist:
- einen Schuh (452) der an einer von der ortsfesten Struktur (207) oder der Außentür (208d) befestigt ist und ein Loch (454) aufweist, dessen Achse parallel zur Translationsrichtung ist,
- einen Finger (456), dessen Achse parallel zur Translationsrichtung ist und der an der anderen von der Außentür (208d) oder der ortsfesten Struktur (207) befestigt ist,
und dass der Finger (456) und das Loch (454) so konfiguriert sind, dass der Finger (456) im Loch (454) untergebracht ist, wenn der Rahmen (208b) in der vorgeschobenen Stellung ist, dass der Finger (456) aus dem Loch (454) austritt, wenn der Rahmen (208b) die vorgeschobene Stellung verlässt, und dass der Finger (456) in das Loch (454) eindringt, wenn der Rahmen (208b) von der zurückgeschobenen Stellung in die vorgeschobene Stellung kommt.

2. Gondel (102) nach Anspruch 1, **dadurch gekennzeichnet, dass** die Abmessungen des Lochs (454) und des Fingers (456) gemäß einer radialen Richtung der Gondel (102) mit einer Anpassung der gleitenden Art angepasst werden.

3. Gondel (102) nach einem der Ansprüche 1 oder 2, **dadurch gekennzeichnet, dass** das Loch (454) gemäß einer Richtung global tangential bezüglich der Gondel (102) länglich ist.

4. Zweistrom-Turbostrahltriebwerk (100), das einen Motor und eine Gondel (102) nach einem der vorhergehenden Ansprüche aufweist, und das den Motor umgibt und mit ihm einen Sekundärkanal definiert.

5. Luftfahrzeug (10), das mindestens ein Zweistrom-Turbostrahltriebwerk (100) nach dem vorhergehenden Anspruch aufweist.

## Claims

1. Nacelle (102) for a dual flow jet engine (100) having a secondary jet, said nacelle (102) having a window (210) that is open between the secondary jet and the outside of the nacelle (102) and comprising:
- a fan casing (206),
- a fixed structure (207) fixed to the fan casing (206), and
- a thrust-reversing system (250) having a frame (208b) and outer doors (208d) articulated by a rear edge on the frame (208b),
the frame (208b) being translationally mobile on the fixed structure (207) in a direction of translation between an advanced position in which the frame (208b) is positioned so that the outer doors (208d) are close to the fan casing (206) and a retracted position in which the frame (208b) is positioned so that the outer doors (208d) are away from the fan casing (206),
each outer door (208d) being mobile between a stowed position in which it blocks the window (210) and a deployed position in which it does not block the window (210),
the nacelle (102) being **characterized in that**, for each outer door (208d), it comprises at least one anti-vibration system (450) of the outer doors which comprises:
- a chock (452) fixed to one of the fixed structure (207) or the outer door (208d) and having a hole (454) whose axis is parallel to the direction of translation,
- a finger (456) whose axis is parallel to the direction of translation and which is fixed to the other of the outer door (208d) or the fixed structure (207),
and **in that** the finger (456) and the hole (454) are configured so that the finger (456) lodges in the hole (454) when the frame (208b) is in advanced position, so that the finger (456) exits from the hole (454) when the frame (208b) leaves the advanced position, and so that the finger (456) enters into the hole (454) when the frame (208b) goes back to the advanced position from the retracted position.

2. Nacelle (102) according to Claim 1, **characterized in that** the dimensions of the hole (454) and of the finger (456) in a radial direction of the nacelle (102) are fitted with a sliding-type fit.

3. Nacelle (102) according to one of Claims 1 or 2, **characterized in that** the hole (454) is oblong in a globally tangential direction relative to the nacelle (102) .

4. Dual flow jet engine (100) comprising an engine and a nacelle (102) according to one of the preceding claims and which surrounds the engine and defines with it a secondary jet.

5. Aircraft (10) comprising at least one dual flow jet engine (100) according to the preceding claim.
